# EUROPEAN PATENT SPECIFICATION

(11) **EP 2 924 324 B1**
(45) Date of publication and mention of the grant of the patent: **29.03.2017**
(21) Application number: 15154449.1
(22) Date of filing: 10.02.2015
(51) Int. Cl.: F16J 15/32

(54) **Rotation shaft seal**
Wellendichtung
Joint d'arbre de rotation

(30) Priority: 24.03.2014 JP 2014059919
(43) Date of publication of application: 30.09.2015
(73) Proprietor: Mitsubishi Cable Industries, Ltd., Chiyoda-ku Tokyo (JP)
(72) Inventor: Fujii, Nobukazu, Wakayama (JP)
(74) Representative: Hoffmann Eitle

(56) References cited:
- EP-A1- 0 780 606
- EP-A1- 1 227 271
- US-A- 6 102 409

## Description

This invention relates to a rotation shaft seal.

EP 0 780 606 A1 relates to a gas purge lip seal. A shaft seal comprises a resilient sealing ring with a peripheral sealing lip which is deflected axially in use so as to bear radially against a shaft. The sealing contact area on the sealing lip is between predetermined limits, each defined by a change in angle of the surface of the sealing lip so that a substantial contact stress is maintained across the whole sealing contact area in use. The seal can be used in an assembly including a carrier in which the seal is mounted.

EP 1 227 271 A1 describes a lip-type high-pressure seal. The high pressure shaft seal is for use in a refrigerant machine, wherein carbon dioxide is used as a refrigerant in lieu of "Freon". The seal has a sealing lip made of a non-elastomeric polymer material such as nylon that has a small gas permeability coefficient, a region of the sealing lip brought into contact with a shaft to be sealed being lined with a low friction lining of polytetrafluoroethylene. The gas barrier sealing lip of nylon serves to effectively block permeation of carbon dioxide gas under an extremely high pressure of from about 4 MPa to about 12 MPa.

US 6 102 409 A describes a sealing device with a sealing lip made of resin. the space formed by the shaft, the resin lip and an additional lip is filled with grease as a lubricant.

Conventionally, a rotation shaft seal having a seal element of resin is widely used. That is to say, a rotation shaft seal assembled with an outer case of metal and an inner case of metal pressing a seal element of resin to be held (refer to Japanese Provisional Publication No. 2010-065729, for example).

As machines for air (gas) such as a vacuum pump, a compressor, etc., machines having high exhaust (discharge) ability are required for high efficiency and large scale. Response to high-speed rotation, low leakage, durability, etc. are strictly required in a rotation shaft seal used for the machines for air (gas) described above.

As a rotation shaft seal for the above purposes, a rotation shaft seal having a seal element of resin (refer to Japanese Provisional Publication No. 2010-065729 and No. 2009-103264) is used in many cases. However, the seal is not sufficient in stable and long-term sealing ability and durability. Further, it is extremely difficult to achieve stable and long-term sealing ability and durability with a simple construction and low cost.

Therefore, it is an object of the present invention to provide a rotation shaft seal with which working life of the seal element, for sealing gas without lubrication, is extended, and stable and long-term sealing ability is shown.

This object is solved according to the present invention by rotation shaft seal including features of claim 1. Furthermore, detailed embodiments are described in dependent claims 2 and 3.

The present invention will be described with reference to the accompanying drawings, in which:
Figure 1 is a longitudinal cross-sectional view of a rotation shaft seal;
Figure 2 is a longitudinal cross-sectional view of a principal portion showing a first embodiment of the present invention; and
Figure 3 is a longitudinal cross-sectional view of a principal portion showing a second embodiment of the present invention.

Preferred embodiments of the present invention will now be described with reference to the accompanying drawings.

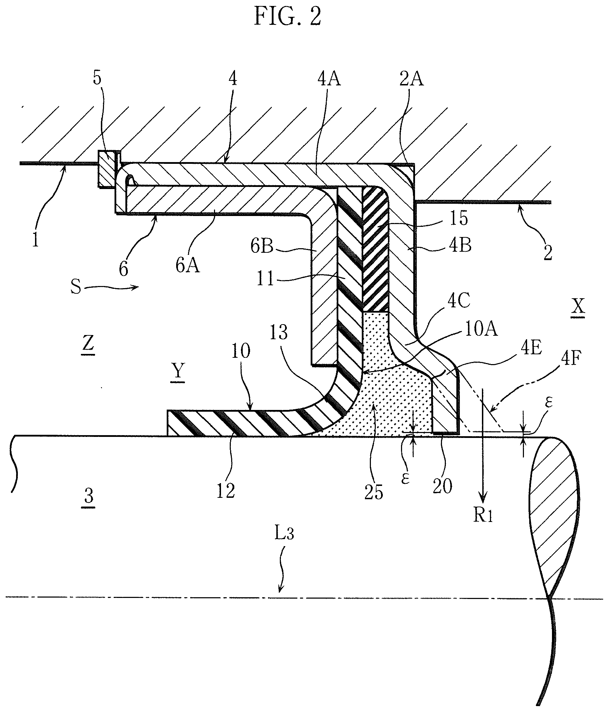

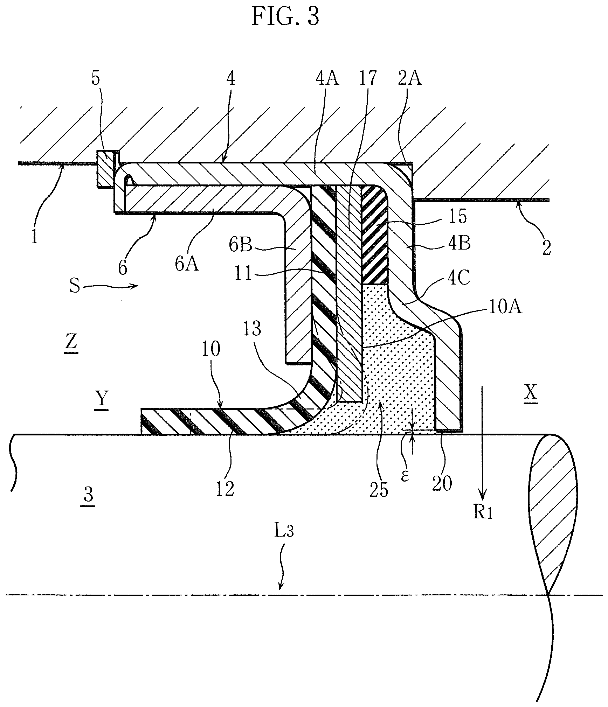

figure 2, and figure 3 respectively show different embodiments of the present invention. First, to describe common constructions, a rotation shaft seal S relating to the present invention is fit to a hole portion 2 as to seal a cylindrical space Z between the hole portion 2 of a housing (body) 1 and a rotation shaft 3. A mark 4 represents an outer case of metal to contact a staged portion 2A of the hole portion 2 for positioning and to be stopped (fixed) by a C-shaped stop ring 5 in figures. And, the outer case 4 has a cylindrical wall portion 4A fit to the hole portion 2 and an inner brim portion 4B extended in radial inner direction.

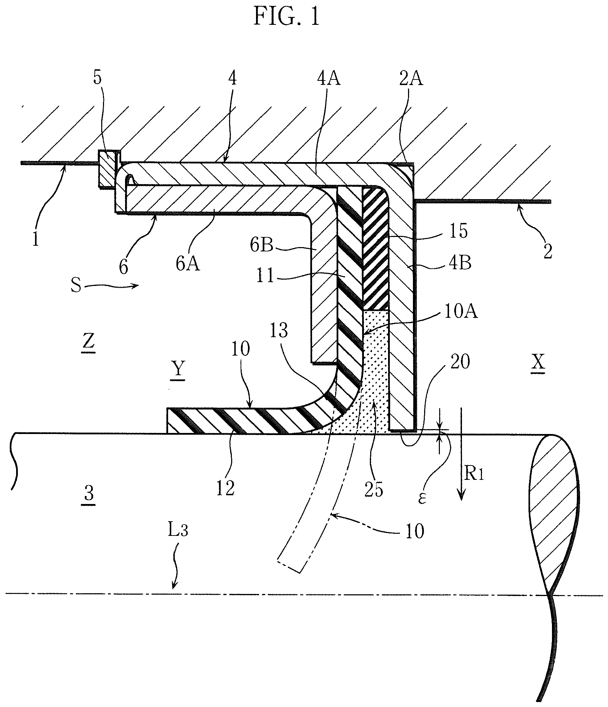

A mark 10 represents a seal element composed of anti-abrasion resin such as fluororesin, of which longitudinal cross section is L-shaped (or J-shaped not shown in figures) in an attached state in figures 1 through 3, and composed of a right-angle flat wall portion 11 at right angles with an axis L₃, a cylindrical wall portion 12 touching a peripheral face of the rotation shaft 3 as to freely slide, and a curved wall portion 13 continuously connecting the wall portions 11 and 12. In an unattached state, namely, in a state of a single part, the seal element 10 may be a flat ring or J-shaped mildly curved in longitudinal cross section as shown with a two-dot broken line in figure 1.

And, a mark 6 represents an inner case of metal L-shaped in longitudinal cross section having a cylindrical wall portion 6A inserted to the cylindrical wall portion 4A of the outer case 4 and an inner brim portion 6B. The inner case 4 may be I-shaped or a square block.

As shown in each of figures 1 through 3, the inner brim portion 4B of the outer case 4 is extended in a radial inner direction R₁ and an inner peripheral end face 20 on the inner peripheral edge of the inner brim portion 4B is made proximate to the rotation shaft 3. In the present invention, "the inner peripheral edge face 20 is 'made proximate' to the rotation shaft 3" means that a side gap dimension ε is a small dimension equal to or less than 0.2mm with which a non-contact state to the rotation shaft 3 can be always maintained.

Further, a grease well (space) 25 is formed between a back face 10A of the seal element 10 L-shaped (or J-shaped) in longitudinal cross section and the inner brim portion 4B (extended in the radial inner direction R₁ to be proximate to the rotation shaft 3).

The back face 10A means a face directed to a space X. Concretely, a face directed to the space X on the right-angle flat wall portion 11 and the curved wall portion 13 of the seal element 10.

To make an additional explanation of figure 1, the inner brim portion 4B of the outer case 4 is composed of a flat wall at right angles with the axis, and straight in longitudinal cross section extended in the radial inner direction R₁ and the inner peripheral end face 20 is kept proximate to the (peripheral face of) rotation shaft 3. A mark 15 represents a gasket disposed between the back 10A of the seal element 10 and the inner brim portion 4B to increase the volume of the grease well 25. That is to say, if the gasket 15 does not exist, the grease well 25 becomes small and approximately triangular formed with the back face 10A corresponding only to the curved wall portion 13 of the seal element 10 and the inner brim portion 4B. The large grease well 25 is secured as drawn with dots in figure 1 by the gasket 15 serving also as a spacer.

Next, an additional explanation of figure 2 is made. Main points different from figure 1 are the configuration of the inner brim portion 4B of the outer case 4, and the configuration and large volume of the grease well 25 shown with dots. That is to say, in the longitudinal cross-sectional configuration of the inner brim portion 4B of the outer case 4, at right angles with the axis from the peripheral end to a middle position in radial direction, a curved portion 4C is made on the middle position in a (radial) direction departed from the seal element 10, and a bent wall portion 4E (refer to a solid line in figure 2) or an inclined wall portion 4F (refer to a two-dot broken line in figure 2) for enlarging the volume of the grease well 25 is formed.

Concretely, the bent wall portion 4E for enlarging the volume is composed of an inclined wall portion continued to the curved wall portion 4C and a right-angle wall portion bent on a lower end of the inclined wall portion at right angles with the axis. The gasket 15 serving as a spacer is used also in figure 2. The gasket 15 may be omitted in figure 2, or the gasket 15 may be disposed between the fit faces of the inner case 6 and the seal element 10 (not shown in figures).

Next, an additional explanation of a third embodiment shown in figure 3 is made. The fundamental construction is same as that of figure 2, and same marks show the same construction. As shown in figure 3, a contact plate 17 of flat ring of metal at right angles with the axis is made contact the back face 10A (of the right-angle flat wall portion 11) of the seal element 10, and the seal element 10 restricts deformation by pressure against the grease well 25 side (deformation by receiving pressure) as shown with a two-dot broken line in figure 3.

If the seal element 10 is deformed as shown with the two-dot broken line by pressure on a sealed space Y side, grease as lubricant preliminarily filled into the grease well 25 leaks to the space X through the small gap between the inner peripheral end face 20 and the rotation shaft 3. The contact plate 17 prevents this leakage. Further, the contact plate 17 also shows a function to prevent decrease of sealing ability caused by the deformation of the seal element 10 shown with the two-dot broken line.

With the rotation shaft seal of the present invention, corresponding to high-speed rotation, excellent sealing performance (sealing ability) is shown stably in a long period of time in machines for air (gas) such as a vacuum pump, a compressor, etc. because the inner brim portion 4B of the outer case 4 is extended in the radial inner direction R₁ to make the inner peripheral end face 20 of the inner brim portion 4B proximate to the rotation shaft 3 to form the grease well 25 between the back face 10A of the seal element 10, of which longitudinal cross section is L-shaped or J-shaped, and the inner brim portion 4B in the rotation shaft seal having the seal element 10 of resin and the outer case 4 of metal. Especially, grease is induced to the sliding portion from the back side of the seal element 10 even with the gas (air) lacking lubrication to maintain lubrication, and working life of the seal element 10 is remarkably extended. Further, there is also an advantage that the construction of the rotation shaft seal is simple and cost increase is very little.

And, fluid leakage through the press-fit portion of the seal element 10 and the inner peripheral side of the outer case 4 can be prevented, the filling amount of the grease becomes large, and used period can be extended further because the gasket 15 also serving as a spacer is disposed between the back face 10A of the seal element 10 and the inner brim portion 4B to enlarge the volume of the grease well 25.

And, the bent wall portion 4E or the inclined wall portion 4F can be easily plastically worked by press work of the outer case 4 of metal, the volume of the grease well 25 can be easily enlarged to reserve larger amount of grease, lubrication on the sliding portion of the seal element 10 is kept, and durability can be improved further because the longitudinal cross sectional configuration of the inner brim portion 4B of the outer case 4 is at right angles with the axis from the peripheral end to the middle position in radial direction, and the curved portion 4C is formed on the middle position in the direction departed from the seal element 10 to form the bent wall portion 4E or the inclined wall portion 4F for enlarging the volume of the grease well 25 from the curved portion 4C to the inner peripheral end face 20 side.

And, the deformation of the seal element 10 when receiving pressure (refer to the two-dot broken line in figure 3) can be stopped, and the grease in the grease well 25 can be prevented from being pushed to the outside (the space X) because the contact plate 17 of flat ring at right angles with the axis is made contact the back face 10A of the seal element 10 to restrict deformation of the seal element 10 to the grease well 25 side caused by receiving pressure. Further long-term use can be realized thereby.

## Claims

1. A rotation shaft seal having a seal element (10) of resin and an outer case (4) of metal, wherein:
an inner brim portion (4B) of the outer case (4) is extended in a radial inner direction (R₁) to make an inner peripheral end face (20) of the inner brim portion (4B) proximate to a rotation shaft (3);
a grease well (25), filled with grease as lubricant, is formed between a back face (10A) of the seal element (10), of which longitudinal cross section is L-shaped or J-shaped, and the inner brim portion (4B);
a longitudinal cross sectional configuration of the inner brim portion (4B) of the outer case (4) is at right angles with an axis from a peripheral end to a middle position in radial direction;
**characterised in that**
a curved portion (4C) is formed on the middle position in a direction departed from the seal element (10) to form a bent wall portion (4E) or an inclined wall portion (4F) for enlarging the volume of the grease well (25) from the curved portion (4C) to the inner peripheral end face (20) side.

2. The rotation shaft seal as set forth in claim 1, wherein a gasket (15) also serving as a spacer is disposed between the back face (10A) of the seal element (10) and the inner brim portion (4B) to enlarge the volume of the grease well (25).

3. The rotation shaft seal as set forth in claim 1 or claim 2, wherein a contact plate (17) of flat ring at right angles with the axis is made contact the back face (10A) of the seal element (10) to restrict deformation of the seal element (10) to the grease well (25) side caused by receiving pressure.

## Patentansprüche

1. Rotationswellendichtung mit einem Dichtelement (10) aus Harz und einem äußeren Gehäuse (4) aus Metall, wobei:
ein innerer Randabschnitt (4B) des äußeren Gehäuses (4) in einer radial inneren Richtung (R₁) verlängert ist, damit eine innere Umfangsendfläche (20) des inneren Randabschnitts (4B) nahe einer Rotationswelle (3) ist;
ein Schmierfettschacht (25), der mit einem Schmierfett als Schmiermittel gefüllt ist, zwischen einer Rückfläche (10A) des Dichtelements (10), von welchem ein Längsquerschnitt L-förmig oder J-förmig ist, und dem inneren Randabschnitt (4B) ausgebildet ist;
eine Längsquerschnittausgestaltung des inneren Randabschnitts (4B) des äußeren Gehäuses (4) im rechten Winkel zu einer Achse von einem Umfangsende zu einer mittleren Position in radialer Richtung ist;
**dadurch gekennzeichnet, dass**
ein gebogener Abschnitt (4C) an der mittleren Position in einer von dem Dichtelement (10) abweichenden Richtung ausgebildet ist, um einen gebogenen Wandabschnitt (4E) oder einen geneigten Wandabschnitt (4F) auszubilden, zum Vergrößern des Volumens des Schmierfettschachts (25) von dem gebogenen Abschnitt (4C) zu der Seite der inneren Umfangsendfläche (20).

2. Rotationswellendichtung gemäß Anspruch 1, wobei eine Dichtscheibe (15), die auch als ein Abstandshalter dient, zwischen der Rückfläche (10A) des Dichtelements (10) und dem inneren Randabschnitt (4B) angeordnet ist, um das Volumen des Schmierfettschachts (25) zu vergrößern.

3. Rotationswellendichtung gemäß Anspruch 1 oder Anspruch 2, wobei eine Kontaktplatte (17) aus einem flachen Ring im rechten Winkel zu der Achse dazu gebracht ist, die Rückfläche (10A) des Dichtelements (10) zu berühren, um eine durch Empfangen von Druck verursachte Verformung des Dichtelements (10) zu der Seite des Schmierfettschachts (25) zu begrenzen.

## Revendications

1. Joint d'arbre rotatif comportant un élément d'étanchéité (10) en résine et un boîtier extérieur (4) en métal, dans lequel :
- une partie de rebord intérieur (4B) du boîtier extérieur (4) s'étend dans une direction radiale intérieure (R₁) de manière à ménager une face d'extrémité périphérique interne (20) de la partie de rebord intérieur (4B) à proximité d'un arbre rotatif (3) ;
- un puits de graisse (25), rempli de graisse servant de lubrifiant, est formé entre une face arrière (10A) de l'élément d'étanchéité (10), dont la section longitudinale est en forme de L ou de J, et la partie de rebord intérieur (4B) ;
- une configuration en coupe longitudinale de la partie de rebord intérieur (4B) du boîtier extérieur (4) est perpendiculaire à un axe allant d'une extrémité périphérique à une position centrale dans la direction radiale;
**caractérisé en ce que**
- une partie courbée (4C) est formée en une position centrale dans une direction s'écartant de l'élément d'étanchéité (10) pour former une partie de paroi courbée (4E) ou une partie de paroi inclinée (4F) pour agrandir le volume du puits de graisse (25) depuis la partie courbée (4C) jusqu'au côté de la face d'extrémité périphérique interne (20).

2. Joint d'étanchéité d'arbre rotatif selon la revendication 1, dans lequel un joint d'étanchéité (15) servant également d'entretoise est disposé entre la face arrière (10A) de l'élément d'étanchéité (10) et la partie de rebord intérieur (4B) pour agrandir le volume du puits de graisse (25).

3. Joint d'étanchéité d'arbre rotatif selon la revendication 1 ou la revendication 2, dans lequel une plaque de contact (17) en anneau plat perpendiculaire à l'axe est mise en contact avec la face arrière (10A) de l'élément d'étanchéité (10) pour restreindre une déformation de l'élément d'étanchéité (10) du côté du puits de graisse (25) provoquée par réception d'une pression.
